# EUROPÄISCHE PATENTANMELDUNG

(11) **EP 4 772 931 A1**
(43) Veröffentlichungstag der Anmeldung: **08.07.2026**
(21) Anmeldenummer: 25150583.0
(22) Anmeldetag: 07.01.2025
(51) Int. Cl.: G02B 27/42, G03B 21/10, G03B 21/06, G03B 21/62, G02B 5/18, G03B 21/60

(54) **ANZEIGEVORRICHTUNG UND SYSTEM ZUR DARSTELLUNG EINES HOLOGRAMMS**

(71) Anmelder: Hübner GmbH & Co. KG, 34123 Kassel (DE); Carl Zeiss Jena GmbH, 07745 Jena (DE)
(72) Erfinder: HÜBSCH, Daniel, 34277 Fuldabrück (DE); BRIMO, Konrad Philipp, 40221 Düsseldorf (DE); SCHUETZ, Viktor, 07743 Jena (DE)
(74) Vertreter: Ter Meer Steinmeister & Partner

(57) **Zusammenfassung**

Gemäß einem Aspekt der Offenbarung wird eine Anzeigevorrichtung für ein Objekt des öffentlichen Personenverkehrs zum Darstellen eines Bildes bereitgestellt. Die Anzeigevorrichtung umfasst eine diffraktive Folie, die ein Volumengitter aufweist und eingerichtet ist, einfallendes Licht mit einer vorbestimmten Wellenlänge in einem winkelspezifischen Betrachtungsbereich darzustellen. Die Anzeigevorrichtung umfasst ferner eine bildgebende Lichtquelle zur Emission von Licht mit der vorbestimmten Wellenlänge. Die bildgebende Lichtquelle ist beabstandet zur diffraktiven Folie angeordnet. Die bildgebende Lichtquelle ist eingerichtet, die diffraktive Folie zu beleuchten.

## Beschreibung

### Technisches Gebiet

Die vorliegende Erfindung betrifft ein transparentes Display, das vorzugsweise nachrüstbar ist, vorzugsweise in Transportmitteln des öffentlichen Personenverkehrs.

### Technischer Hintergrund

Nachrüstbare Anzeigen in öffentlicher Verkehrsinfrastruktur ermöglichen die Bereitstellung von zusätzlichen Informationen und/oder ermöglichen eine Unterhaltung für Fahrgäste. Allerdings gibt es bei herkömmlichen Anzeigesystemen Herausforderungen bei der Komplexität, den Bereitstellungskosten und insbesondere bei der Integration herkömmlicher Anzeigesysteme in bestehende Infrastrukturen.

Die Anzeigeflächen in herkömmlichen Objekten, wie etwa Transportmittel, Haltestellen oder Bahnsteigen, des öffentlichen Personenverkehrs sind auf vereinzelte Anzeigevorrichtungen beschränkt. Derartige Anzeigevorrichtungen konkurrieren zudem mit dem (Innenraum)Platzangebot für Fahrgäste. Ein Bedarf an weiterer Anzeigefläche kann derzeit kaum ohne Einbußen bei der Fahrgastkapazität gestillt werden. Daher stellt vor allem der Platzbedarf von aktuellen Displays und deren Befestigung und deren elektrischer Anschluss im Objekt die Betreiber vor große Herausforderungen.

Herkömmliche Anzeigetafeln in Objekten des öffentlichen Personenverkehrs ermöglichen zudem keine Interaktion des Benutzers bzw. des Fahrgasts mit den dargestellten Informationen.

Weiter sind herkömmliche Anzeigetafeln den rauen Bedingungen in den Objekten ausgesetzt. Dazu zählen große Temperaturschwankungen, Feuchtigkeit, Vibrationen aufgrund von Wettereinflüssen und/oder der Bewegung des Transportmittels und mechanische Gewalteinwirkung durch Vandalismus.

### Zusammenfassung der Erfindung

Es besteht daher Bedarf an einer Anzeigevorrichtung, die in Objekten des öffentlichen Personenverkehrs zusätzlich angebracht bzw. nachgerüstet werden können, ohne Einbußen in der Fahrgastkapazität hinnehmen zu müssen.

Es ist eine Aufgabe der Erfindung, eine Anzeigevorrichtung für Fensterflächen bereitzustellen, das eine weiterhin hohe Durchsichtbarkeit der Fensterflächen gewährleistet.

Es ist eine weitere Aufgabe der Erfindung eine Anzeigevorrichtung bereitzustellen, die einen möglichst weiten Betrachtungswinkel aufweist.

Es ist ferner eine Aufgabe der Erfindung ein dazu korrespondierendes System bereitzustellen, dass in nahezu jedes Transportmittel des öffentlichen Personenverkehrs integriert werden kann und dabei die vorhandenen Glasflächen als Display nutzt.

Es ist ferner eine Aufgabe der Erfindung, ein System bereitzustellen, das eine Interaktion mit von einer Anzeigevorrichtung dargestellten Informationen ermöglicht.

Eine weitere Aufgabe ist es eine Anzeigevorrichtung bereitzustellen, die ausreichend robust für den Einsatz in Objekten des öffentlichen Personenverkehrs ist.

Zumindest eine dieser Aufgaben wird durch die Merkmale der Anzeigevorrichtung nach dem unabhängigen Anspruch 1 bzw. durch die Merkmale des dazu korrespondierenden unabhängigen Systemanspruchs gelöst. Weiterbildungen der Erfindung sind in den jeweiligen abhängigen Ansprüchen angegeben.

Der Erfindung liegt die Idee zugrunde, eine Anzeigevorrichtung für ein Objekt des öffentlichen Personenverkehrs zur Darstellung eines Bildes bereitzustellen, wobei die Anzeigefläche als transparente diffraktive Folie ausgestaltet sein kann und dadurch an Fensterflächen eines Transportmittels des öffentlichen Personenverkehrs angeordnet werden kann, ohne das Fenster merkbar zu verdunkeln.

Gemäß einem Aspekt der Offenbarung wird eine Anzeigevorrichtung zum Darstellen eines Hologramms bereitgestellt. Die Anzeigevorrichtung umfasst eine diffraktive Folie, die ein Volumengitter aufweist und eingerichtet ist, einfallendes Licht mit einer vorbestimmten Wellenlänge in einem winkelspezifischen Betrachtungsbereich darzustellen bzw. in den Betrachtungsbereich zu lenken. Die Anzeigevorrichtung umfasst ferner eine bildgebende Lichtquelle zur Emission von Licht mit der vorbestimmten Wellenlänge. Die bildgebende Lichtquelle ist zur diffraktiven Folie beabstandet angeordnet. Die bildgebende Lichtquelle ist eingerichtet, die diffraktive Folie direkt bzw. unmittelbar zu beleuchten.

"Direkt beleuchten" meint, dass zwischen der bildgebenden Lichtquelle und der diffraktiven Folie keine Umlenkung der emittierten Lichtstrahlen notwendig ist, um das emittierte Licht auf die diffraktive Folie abzubilden. In besonderen Ausgestaltungen ist auch eine indirekte Beleuchtung möglich, wobei das ausgegebene Licht über optische Elemente umgelenkt wird, um auf die diffraktive Folie zu beleuchten.

Gemäß einem weiteren Aspekt der Offenbarung wird ein System bereitgestellt. Das System umfasst ein Objekt des öffentlichen Personenverkehrs, wie etwa einen Wagen, Waggon oder Wagenkasten für ein Transportmittel und/oder eine Einrichtung des öffentlichen Personenverkehrs, z.B. Bushaltestellen oder Bahnhofsanzeigen. Das System umfasst ferner zumindest eine Anzeigevorrichtung nach dem vorstehenden Aspekt der Offenbarung. Die bildgebende Lichtquelle ist mit einer Versorgungsinfrastruktur des Objekts bzw. Wagenkastens verbunden und/oder in dessen Auskleidung integriert.

Die erfindungsgemäße Anzeigevorrichtung hat den Vorteil, dass sie mit einfachen Mitteln nachrüstbar ist, insbesondere im Fahrgastraum eines Transportmittels des öffentlichen Personenverkehrs oder an daran angrenzende Infrastruktur. Die diffraktive Folie kann an bzw. auf bestehenden Verkehrsflächen, beispielsweise Fensterflächen, Gepäckablageflächen, Wandflächen, Türflächen Deckenflächen, und/oder Windfangflächen angeordnet werden. Die bildgebende Lichtquelle, die etwa die Größe einer Zigarettenschachtel haben kann, kann zur Beleuchtung der diffraktiven Folie ebenfalls problemlos angeordnet werden. Dadurch können insbesondere in öffentlichen Verkehrsmitteln neue Anzeigeflächen kostengünstig erschaffen werden.

Als öffentlicher Personenverkehr gilt im Rahmen der Offenbarung die Beförderung von Personen durch Unternehmen des öffentlichen Verkehrs. Der öffentliche Personenverkehr kann sowohl Personennahverkehr als auch Personenfernverkehr umfassen. Als Transportmittel des öffentlichen Personenverkehrs kommt insbesondere jegliche Art von Bussen, Taxis, Straßen- und Stadtbahnen, Zügen, Schiffen, Helikoptern und Flugzeugen in Betracht. Jedes dieser Transportmittel weist einen Fahrgastraum auf, in dem die erfindungsgemäße Anzeigevorrichtung nachrüstbar ist. Ebenso ist die erfindungsgemäße Anzeigevorrichtung in Einrichtungen wie etwa Haltestellen, Aufzügen, Bahnsteigen, usw. nachrüstbar.

Die Anzeigevorrichtung und das System nach den vorstehenden Aspekten der Offenbarung können ferner eines oder mehrere der folgenden Merkmale aufweisen:

Die Anzeigevorrichtung kann ferner eine Schnittstelle zu einer Steuereinheit zum Empfangen eines Bildsignals umfassen. Die bildgebende Lichtquelle kann eingerichtet sein, ein Licht zu emittieren, wobei das Licht das Bildsignal repräsentiert.

Die diffraktive Folie kann eine durch Laserlicht mit der vorbestimmten Wellenlänge eingebrachte Mikrostruktur aufweisen. Die Mikrostruktur kann eine Beugungsstruktur umfassen. Die Mikrostruktur kann ein Volumenhologramm umfassen. Die Mikrostruktur kann ein Volumengitter umfassen. Unter einem Volumenhologramm kann im Rahmen der vorliegenden Offenbarung eine Gitterstruktur in der diffraktiven Folie bezeichnet sein, die durch Belichtung der diffraktiven Folie mittels kohärentem Laserlicht einer vorbestimmten Wellenlänge beispielsweise unter Ausnutzung des photorefraktiven Effekts eingebracht, graviert oder belichtet ist. Die Gitterstruktur bzw. das Volumengitter kann eine räumlich-periodische Änderung der Brechzahl in einer Richtung aufweisen. Die Gitterstruktur bzw. das Volumengitter kann eine vorbestimmte Anzahl an Bragg-Ebenen aufweisen. Die diffraktive Folie kann als holografischer Diffusor ausgebildet sein. Die diffraktive Folie kann einen holografischen Film umfassen. Die diffraktive Folie kann eine Anzeigetafel der Anzeigevorrichtung bilden. Die diffraktive Folie kann als mechanisches Element besonders einfach nachgerüstet werden, da keine Anbindung an eine elektrische Versorgung erforderlich ist.

Das Volumengitter der diffraktiven Folie kann mehrere Teilgitter aufweisen. Die Teilgitter können jeweils durch Belichtung mit Laserlicht mit einer vorbestimmten Wellenlänge eingebracht sein. Die mehreren Teilgitter können jeweils für eine vorbestimmte Wellenlänge mit einer gewissen Bandbreite (von beispielsweise ± 10 nm) ausgelegt sein. Dabei kann es sich beispielsweise um Wellenlängen für rotes, grünes und blaues Licht handeln. Dadurch kann ein mehrfarbiges Bild umgelenkt werden. Bevorzugt ist die bildgebende Lichtquelle daran angepasst und eingerichtet, entsprechende Farbteilbilder zu erzeugen. Diese Farbteilbilder können gleichzeitig oder so schnell nacheinander erzeugt werden, dass ein Betrachter sie nur in Überlagerung als mehrfarbiges Bild wahrnehmen kann.

Der Betrachter kann das durch die bildgebende Lichtquelle emittierte Bild ausschließlich innerhalb des Betrachtungsbereichs wahrnehmen.

Die Anzeigevorrichtung kann ferner einen holografischen Filter aufweisen, wie beispielsweise in der DE 10 2021 108 354 A1 beschrieben. Dadurch kann Störlicht verhindert werden.

Die diffraktive Folie kann eine Transparenz von zumindest 90%, bevorzugt zumindest 94% und besonders bevorzugt 96% aufweisen. Durch eine derartig hohe Transparenz der diffraktiven Folie kann die diffraktive Folie auf einer Fensterscheibe angeordnet werden, ohne deren Durchsichtbarkeit für einen Betrachter merkbar zu beeinflussen. Die diffraktive Folie kann eine Polymerfolie sein.

Die Erfinder haben erkannt, dass die Fensterflächen in Transportmitteln oder Einrichtungen des öffentlichen Personenverkehrs eine erhebliche, technisch bisher kaum oder ungenutzte Fläche sind. Aufgrund der hohen Transparenz der diffraktiven Folie können daher in herkömmlichen Transportmitteln große Flächenbereiche nachträglich mit der Anzeigevorrichtung nach einem Aspekt der Erfindung nachgerüstet werden.

Die bildgebende Lichtquelle kann auf einer Betrachterseite der diffraktiven Folie angeordnet sein. Die Betrachterseite kann die Anzeigeseite der diffraktiven Folie sein, d. h. die bildgebende Lichtquelle und ein Betrachter können sich auf derselben Seite der diffraktiven Folie befinden. Die diffraktive Folie kann eingerichtet sein, kein Bild auf derjenigen Seite darstellen, die der bildgebenden Lichtquelle abgewandt ist. Die bildgebende Lichtquelle kann außerhalb eines Blickfelds eines Betrachters der diffraktiven Folie angeordnet sein. Die bildgebende Lichtquelle kann in einem Halbraum auf der Betrachterseite angeordnet sein. Die bildgebende Lichtquelle kann einen Laser umfassen. D. h. die diffraktiven Folie und die bildgebende Lichtquelle sind bspw. im Innenraum des Transportmittels angeordnet. Dadurch kann die dargestellte Information nur von der Innenseite oder vom Innenraum des Transportmittels erkannt werden. Bei Betrachtung der diffraktiven Folie von einer Außenseite, d.h. von außerhalb des Transportmittels, ist die Information nicht erkennbar. In einer besonderen Ausführungsform kann die diffraktive Folie jedoch auch derart konfiguriert sein, das Bild nur auf derjenigen Seite darzustellen, die der bildgebenden Lichtquelle abgewandt ist. Diese Einstellung der diffraktiven Folie kann durch das darin eingebrachte Volumengitter gesteuert werden.

Die bildgebende Lichtquelle kann einen direkten Abstand zur Mitte der diffraktiven Folie und einen Abstand zur Ebene, die durch die diffraktive Folie definiert ist, aufweisen. Der direkte Abstand kann um einen Faktor im Bereich von 2 bis 5 größer sein als der Abstand. Der Abstand zur Ebene ist dabei der Abstand von der bildgebenden Lichtquelle zur gedachten Vergrößerung der Folie, d.h. der Abstand steht senkrecht zur Folie bzw. besteht ein rechter Winkel zwischen Abstandslinie und der Folie. Das heißt, die bildgebende Lichtquelle kann versetzt außerhalb der diffraktiven Folie angeordnet sein, und dabei dennoch die diffraktive Folie beleuchten. Die bildgebende Lichtquelle kann wesentlich näher zur Ebene, die durch die diffraktive Folie definiert ist, als zur Mitte der diffraktiven Folie angeordnet sein. Durch diese Anordnung kann sichergestellt werden, dass kein Betrachter in den Strahlengang zwischen der bildgebenden Lichtquelle und der diffraktiven Folie eingreifen kann. Somit kann eine Beschattung des dargestellten Bildes durch Betrachter vermieden werden.

Die bildgebende Lichtquelle kann einen Bildgeber sowie eine Steuereinheit mit einem Prozessor umfassen. Die Steuereinheit kann den Bildgeber zur Erzeugung eines mehrfarbigen Bildes ansteuern. Bei dem Bildgeber kann es sich um ein LCD-Modul, ein OLED-Modul oder ein LCoS-Modul oder um eine Kippspiegelmatrix handeln. Ferner kann der Bildgeber eine Mattscheibe aufweisen.

Das mehrfarbige Bild kann mittels des Bildgebers dadurch erzeugt werden, dass beispielsweise drei Farbteilbilder mit unterschiedlichen Wellenlängen erzeugt werden. Dabei kann es sich z.B. um ein blaues Farbteilbild mit einer Wellenlänge von 460 nm, ein grünes Farbteilbild mit einer Wellenlänge von 500 nm und ein rotes Farbteilbild mit einer Wellenlänge von 640 nm handeln. Die Farbteilbilder können gleichzeitig oder alternierend zeitlich so schnell hintereinander erzeugt werden, dass für einen Betrachter nur die Überlagerung als mehrfarbiges Bild wahrnehmbar ist.

Zwischen der bildgebenden Lichtquelle und der diffraktiven Folie kann eine Strahlformungsoptik angeordnet sein. Durch die Strahlformungsoptik kann der Abstand, insbesondere der direkte Abstand und/oder der senkrechte Abstand, zwischen bildgebender Lichtquelle und diffraktiver Folie reduziert werden. Die Strahlformungsoptik kann das Beleuchten einer relativ großen diffraktiven Folie durch eine Lichtquelle mit relativ kurzem Abstand zur diffraktiven Folie ermöglichen.

Die bildgebende Lichtquelle kann derart angeordnet sein, dass das emittierte Licht mit einem Einfallswinkel von zumindest 8° auf die diffraktive Folie einstrahlt. In dieser Konfiguration kann eine Totalreflexion des einfallenden Lichts an der diffraktiven Folie vermieden werden.

Die diffraktive Folie und die bildgebende Lichtquelle können auf einer Verkehrsfläche des Objekts und/oder auf einer Fensterfläche des Objekts angeordnet sein, insbesondere in einem Innenraum eines Transportmittels des öffentlichen Personenverkehrs. Die diffraktive Folie kann vorzugsweise auf einer Fensterfläche des Transportmittels angeordnet sein. Die diffraktive Folie kann stoffschlüssig mit der Fensterfläche des Transportmittels verbunden sein. Die diffraktive Folie kann lösbar mit der Fensterfläche des Transportmittels verbunden sein, vorzugsweise rückstandslos lösbar. Die bildgebende Lichtquelle kann vorzugsweise oberhalb der diffraktiven Folie an einer Decke des Transportmittels unweit der diffraktiven Folie angeordnet sein. Die diffraktive Folie kann vorzugsweise eine selbstklebende Seite aufweisen, mit der sie auf der Fensterfläche befestigt wird.

Die Anzeigevorrichtung kann ferner eine Schutzfolie und/oder eine Antireflexfolie aufweisen. Die Schutzfolie und/oder die Antireflexfolie kann auf der diffraktiven Folie, insbesondere auf der Betrachterseite bzw. Anzeigeseite, angeordnet sein. Die Schutzfolie kann die diffraktive Folie vor mechanischen Einflüssen aus der Umgebung schützen. Ebenso kann die Schutzfolie ein Ablösen, Beschädigen bzw. Entfernen der diffraktiven Folie verhindern oder zumindest erheblich erschweren. Hierzu kann die Schutzfolie insbesondere eine kratzfeste Oberfläche aufweisen. Die Schutzfolie und/oder die Antireflexfolie können mit der diffraktiven Folie stoffschlüssig verbunden sein. Die Schutzfolie und/oder die Antireflexfolie kann größer als die diffraktiven Folie sein, um die Ränder der diffraktiven Folie zu bedecken. Die Schutzfolie und/oder die Antireflexfolie kann mehrlagig aufgebaut sein, um verschiedene optische und/oder mechanische Funktionen zu übernehmen. Die Schutzfolie und/oder die Antireflexfolie kann vorzugsweise eine selbstklebende Seite aufweisen, mit der sie auf diffraktiven Folie und der Fensterfläche befestigt wird.

In einer Ausführungsform kann die Anzeigevorrichtung eine Glasscheibe, vorzugsweise aus Panzerglas, umfassen, die auf der Betrachterseite vor der diffraktiven Folie angeordnet sein kann. Durch das Abschirmen der diffraktiven Folie mittels einer zusätzlichen Glasscheibe kann der Schutz der diffraktiven Folie insbesondere gegen Vandalismus erheblich verbessert werden.

Ferner kann die bildgebende Lichtquelle eine Schutzhaube bzw. eine Schutzkassette aufweisen, um die bildgebende Lichtquelle vor Umwelteinflüssen und/oder Vandalismus zu schützen.

Die diffraktive Folie kann einen Auskopplungswinkel zur Darstellung des Holograms aufweist, der sich vom Einfallswinkel des Lichts der bildgebenden Lichtquelle unterscheidet. Dadurch kann das Licht der bildgebenden Lichtquelle mit einem Raumwinkel projiziert werden, der von sitzenden und/oder stehenden Betrachtern im Transportmittel des öffentlichen Personenverkehrs bequem einsehbar ist. Die diffraktive Folie kann eine Mikrostruktur umfassen, die konfiguriert ist, das Licht der bildgebenden Lichtquelle senkrecht zur diffraktiven Folie mit einem Öffnungswinkel im Bereich von 30° bis 60°, vorzugsweise 40° bis 50°, darzustellen.

Die Anzeigevorrichtung kann ferner eine Steuervorrichtung umfassen, die durch einen Kommunikationskanal mit der bildgebenden Lichtquelle verbunden ist. Die Steuervorrichtung kann eingerichtet sein, ein Bildsignal zu erzeugen und/oder zu empfangen und der bildgebenden Lichtquelle über den Kommunikationskanal bereitzustellen. Die bildgebende Lichtquelle kann das Bildsignal empfangen und in ein dem Bildsignal entsprechenden Licht mit der vorbestimmten Wellenlänge umwandeln. Das Bildsignal kann Steuerdaten bzw. ein Quellensteuersignal umfassen, basierend auf dem die bildgebende Lichtquelle das Licht emittieren kann. Die vorbestimmte Wellenlänge kann aus einem vorbestimmten Wellenlängenbereich ausgewählt sein. Das Bildsignal kann Anweisungen für die bildgebende Lichtquelle zur Emission eines das Bildsignal repräsentierenden Lichts enthalten, wobei durch Interaktion des emittierten Lichts mit der diffraktiven Folie das emittierte Licht in den Betrachtungsbereich umgelenkt werden kann. Die Steuervorrichtung kann das Bildsignal selbst erzeugen bzw. anpassen. Die Steuervorrichtung kann ferner eine Schnittstelle zur Fernsteuerung umfassen, sodass das Bildsignal extern bereitgestellt werden kann. Das Bildsignal kann dynamisch angepasst und/oder aktualisiert werden. Die Aktualisierung des Bildsignals kann aus der Ferne ("overthe-air") erfolgen. Insbesondere können durch die Aktualisierung des Bildsignals dynamische Bildfolgen, Clips und/oder Videos als Bildsignal bereitgestellt und durch die diffraktive Folie in den Betrachtungsbereich umgelenkt werden.

Der Kommunikationskanal kann drahtlos und/oder drahtgebunden sein. Die bildgebende Lichtquelle kann einen Empfänger aufweisen, mittels dem das Bildsignal von der Steuervorrichtung empfangen werden kann. Die Steuervorrichtung kann eine zentrale Wagensteuereinheit des Transportmittels des öffentlichen Personenverkehrs sein. Alternativ kann die Steuervorrichtung mit der bildgebenden Lichtquelle in einem gemeinsamen Gehäuse angeordnet sein.

Die Anzeigevorrichtung kann ferner zumindest eine Sensoreinheit umfassen. Die Steuervorrichtung kann konfiguriert sein, ein Sensorsignal von der zumindest einen Sensoreinheit zu empfangen oder abzufragen und das Licht der bildgebenden Lichtquelle basierend auf dem Sensorsignal zu steuern. Hierzu kann die Steuervorrichtung das Bildsignal basierend auf dem Sensorsignal anpassen.

Zumindest eine der zumindest einen Sensoreinheit und die Steuervorrichtung können in einem gemeinsamen Gehäuse angeordnet sein. Dadurch kann die Anzahl der physischen Komponenten zum Nachrüsten der Anzeigevorrichtung verringert werden.

Die zumindest eine Sensoreinheit kann einen Positionssensor umfassen. Der Positionssensor kann eingerichtet sein, Koordinaten der Anzeigevorrichtung zu ermitteln, beispielsweise basierend auf einem globalen Navigationssatellitensystem (GNSS), wie etwa GPS, GLONASS, Galileo, Beidou, und so weiter. Das Sensorsignal kann einen Positionswert umfassen. Der Positionswert kann geographische Koordinaten mit Längengrad und Breitengrad umfassen. Der Positionswert kann einen Streckenabschnitt bzw. Streckenfortschritt entlang einer vorgegebene Beförderungsstrecke des Transportmittels umfassen. Der Positionswert kann einen Haltestellencode und/oder -namen angeben. Die Steuervorrichtung kann konfiguriert sein, das Bildsignal basierend auf dem Positionswert anzupassen. Beispielsweise kann das Bildsignal einen Inhalt umfassen, das auf den aktuellen Ort der Anzeigevorrichtung abgestimmt ist. Dies ermöglicht beispielsweise die Anzeige von Informationen zu Sehenswürdigkeiten oder Haltestellen in Echtzeit. Beim Anfahren einer Haltestelle, etwa unter der Erde, kann die Steuervorrichtung der bildgebenden Lichtquelle ein Bildsignal bereitstellen, durch das ein dreidimensionaler Lageplan der Haltestelle und deren Ausgänge dargestellt werden kann.

Die zumindest eine Sensoreinheit kann einen Lichtsensor umfassen. Der Lichtsensor kann als Fotodiode bzw. Fotometer oder Luxmeter ausgebildet sein und konfiguriert sein, die Lichtintensität aufgrund von Umgebungslicht zu bestimmen. Das Sensorsignal kann einen Helligkeitswert umfassen.

Sofern das Sensorsignal einen Helligkeitswert umfasst, kann die Steuervorrichtung konfiguriert sein, eine Lichtintensität der bildgebenden Lichtquelle basierend auf dem Helligkeitswert zu steuern. Die Steuervorrichtung kann konfiguriert sein, die Lichtintensität abhängig vom Helligkeitswert stufenlos zu erhöhen und/oder zu reduzieren.

Die zumindest eine Sensoreinheit kann eine Kamera umfassen. Die Kamera kann konfiguriert sein, den winkelspezifischen Betrachtungsbereich zu erfassen. Die Kamera kann konfiguriert sein, eine Betrachterinteraktion in dem Betrachtungsbereich bzw. Bewegung an oder vor der diffraktiven Folie zu erfassen.

Die zumindest eine Kamera kann einen Sichtbereich aufweisen, der die diffraktive Folie und deren winkelspezifischen Betrachtungsbereich umfasst. Wenn das System mehrere Kameras aufweist, können die mehreren Kameras einen kombinierten Sichtbereich aufweisen, der zumindest den mittels der diffraktiven Folie beleuchteten Betrachtungsbereich einschließt. Die eine oder mehreren Kameras können Interaktionen eines Betrachters bzw. eines Fahrgasts mit der durch die diffraktive Folie dargestellten Information erkennen. Mit anderen Worten kann die Kamera Gesten des Betrachters im Zusammenhang mit dem durch die Anzeigevorrichtung dargestellten Information erkennen. Die Kamera kann basierend auf einer erkannten Geste ein Steuersignal erzeugen. Die Steuervorrichtung, die eingerichtet sein kann, mit der Kamera zu kommunizieren, kann basierend auf dem Kamerasignal bzw. dem Steuersignal der Kamera das Bildsignal erzeugen und vorzugsweise der bildgebenden Lichtquelle bereitstellen. Die Steuervorrichtung kann ferner objektspezifische Funktionen, wie etwa das Öffnen einer Türe und/oder das Übermitteln eines Haltewunsches, basierend auf dem Kamerasignal bzw. dem Steuersignal der Kamera steuern. Durch eine Umwandlung von Gesten des Betrachters zu einem Bildsignal bzw. Steuersignal, ermöglicht eine Interaktion des Betrachters bzw. Fahrgasts mit der Anzeigevorrichtung und/oder dem Objekt des öffentlichen Personenverkehrs. Als Kamera können bereits vorhandene Überwachungskameras in herkömmlichen Wagenkasten eingesetzt werden. Für eine detailliertere Erfassung von Gesten in einer Interaktion in dem Betrachtungsbereich kann eine zusätzliche Kamera vorgesehen sein. Folglich kann die Interaktion des Betrachters mit einer erfindungsgemäßen Anzeigevorrichtung ebenfalls nachgerüstet werden.

Alternative Interaktionsmöglichkeiten mit der Anzeigevorrichtung nach einem Aspekt der Erfindung können durch kapazitive Gestensteuerung, projiziert-kapazitive Touchscreens (PCAP), resistive Touchscreens oder Infrarot-Touchscreens bereitgestellt werden. Derartige Sensorik kann einen Anschluss der diffraktiven Folie an eine Stromversorgung bedingen und ist daher besser für die Produktion von neuen Fensterscheiben als zur einfachen Nachrüstung an bestehenden Fensterscheiben geeignet.

Die kapazitive Gestensteuerung kann 2D-Touch-Funktionalität mit 3D-Gestensteuerung kombinieren. Dadurch können Berührungen der Anzeigetafel als auch berührungslose Eingaben durch Handbewegungen erfasst werden und in jeweils ein Steuersignal gewandelt werden. Die kapazitive Gestensteuerung lässt sich in bestehende Systeme integrieren und eignet sich insbesondere für kleine bis mittlere Displaygrößen.

Die projiziert-kapazitive Touch-Funktionalität ist aus herkömmlichen Smartphones und Tablets bekannt. Derartige Touchscreens sind robust und für raue Umgebungen geeignet, da sie durch eine Glasabdeckung geschützt sind.

Resistive Touchscreens sind konfiguriert, auf Druck zu reagieren. Sie können mit einem Stift oder mit einem Finger bedient werden.

Infrarot-Touchscreens können ein Raster aus Infrarotstrahlen zur Berührungserkennung verwenden. Dadurch können Benutzerinteraktionen reaktionsschnell erfasst werden. Durch das Raster aus Infrarotstrahlen können auch größere Anzeigetafeln abgedeckt werden.

Das System kann ferner eine zentrale Wagensteuervorrichtung aufweisen, die eingerichtet ist, ein Bildsignal zu erzeugen und/oder zu empfangen und der zumindest einen Anzeigevorrichtung bereitzustellen.

Zusammenfassend kann die erfindungsgemäße Anzeigevorrichtung eine Umwandlung von Fensterflächen in Displays in Transportmitteln des Personenverkehrs bewirken, und damit mannigfaltige Möglichkeiten zur Informationsvermittlung schaffen. Durch Aktualisierungen von Bildsignalen aus der Ferne und/oder basierend auf erfassten Koordinatenpaaren können Informationen dynamisch, situationsgerecht und aktuell über die Anzeigevorrichtung bereitgestellt werden. Der Einsatz von Schutzfolien und/oder Panzerglasabdeckungen kann die Robustheit der Anzeigevorrichtung steigern und dadurch Anforderungen des öffentlichen Verkehrs erfüllen.

### Kurzbeschreibung der Figuren

Im Folgenden werden die Erfindung oder weitere Ausführungsformen und Vorteile der Er-findung anhand von Zeichnungen näher erläutert, wobei die Zeichnungen nur Ausführungsformen der Erfindung beschreiben. Gleiche Bauteile sind in den Zeichnungen mit den gleichen Bezugszeichen versehen. Elemente, die mit gestrichelten Linien gezeichnet sind, werden als optionale Elemente betrachtet. Die Zeichnungen sind nicht als maßstabsgetreu anzusehen, und einzelne Elemente der Zeichnungen können in übertrieben großer oder übertrieben vereinfachter Form dargestellt sein.
Fig. 1 zeigt eine schematische Seitenansicht einer Ausführungsform der Anzeigevorrichtung nach einem Aspekt der Offenbarung.
Fig. 2 zeigt eine perspektivische schematische Ansicht einer Ausführungsform des Systems nach einem Aspekt der Offenbarung.
Fig. 3 zeigt eine perspektivische schematische Ansicht einer weiteren Ausführungsform des Systems nach einem Aspekt der Offenbarung.
Fig. 4 zeigt ein Ablaufdiagramm eines Steuerungsverfahrens der Anzeigevorrichtung nach einem Aspekt der Erfindung.

### Ausführliche Beschreibung der Figuren

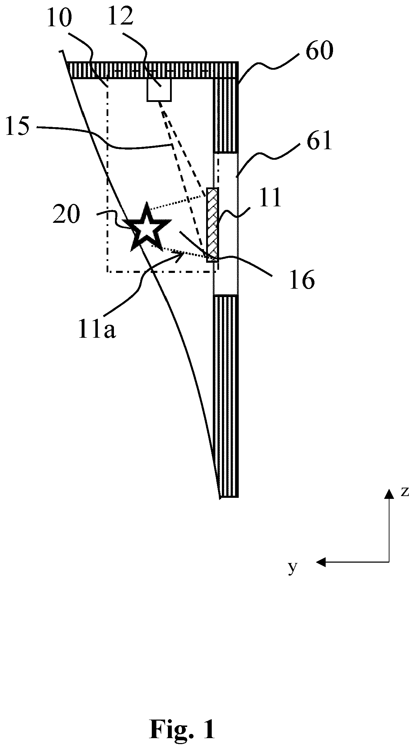

Fig. 1 zeigt eine schematische Seitenansicht einer Ausführungsform der Anzeigevorrichtung 10 nach einem Aspekt der Offenbarung.

Die Anzeigevorrichtung 10 umfasst eine diffraktive Folie 11 und eine bildgebende Lichtquelle 12. Wie in Fig. 1 dargestellt, kann die diffraktive Folie 11 auf einer Fensterfläche 61 eines Wagenkastens 60 eines Transportmittels des öffentlichen Personenverkehrs angeordnet sein. In der Seitenansicht der Fig. 1 ist ein entsprechender Ausschnitt eines Wagenkastens 60 dargestellt. Die Anzeigeseite 11a der diffraktiven Folie 11 ist in den Innenraum des Wagenkastens 60 gerichtet, in Fig. 1 als y-Richtung dargestellt.

Die diffraktive Folie 11 kann eine Mikrostruktur aufweisen, die durch Laserlicht mit einer vorbestimmten Wellenlänge bzw. einem vorbestimmten Wellenlängenbereich eingraviert bzw. als Volumenhologramm einbelichtet ist. Dadurch ist die diffraktive Folie 11 konfiguriert, bei Beleuchtung mit Licht 15 mit der vorbestimmten Wellenlänge bzw. aus dem vorbestimmten Wellenlängenbereich, in einem geeigneten Winkel, ein Betrachtungsbereich 20 in y-Richtung zur diffraktiven Folie 11 beabstandet zu erzeugen bzw. darzustellen. Dazu wird ein umgelenkter Lichtstrahl 16 mittels der Mikrostruktur der diffraktiven Folie 11 ausgekoppelt. In Fig. 1 ist der Betrachtungsbereich 20 als Stern dargestellt.

Die Form des Betrachtungsbereichs 20 ist durch die bildgebende Lichtquelle 12 gesteuert. Die bildgebende Lichtquelle 12 ist eingerichtet, das Licht entsprechend einem Bildsignal zu emittieren. Die bildgebende Lichtquelle 12 kann beispielsweise ein Projektor sein. Die bildgebende Lichtquelle 12 ist derart nah an der Ebene, die durch die diffraktive Folie 11 definiert ist, angeordnet, dass das Licht 15 mit einem spitzen Einfallswinkel von zumindest 8° auf die diffraktive Folie 11 einfällt. Wie in Fig. 1 dargestellt kann die bildgebende Lichtquelle in z-Richtung und y-Richtung beabstandet von der diffraktiven Folie 11 angeordnet sein.

In Fig. 1 sind die von der bildgebenden Lichtquelle 12 emittierten Lichtstrahlen durch gestrichelte Linien skizziert und die aus der diffraktiven Folie 11 umgelenkten Lichtstrahlen 16 als gepunktete Linien skizziert.

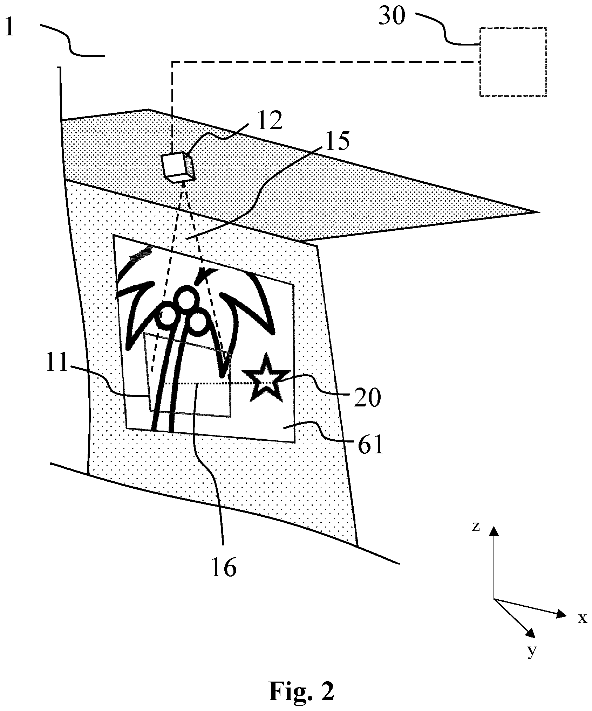

Fig. 2 zeigt eine perspektivische schematische Ansicht einer Ausführungsform des Systems 1 nach einem Aspekt der Offenbarung.

In Fig. 2 ist eine Innenansicht einer Fensterfläche 61 eines Wagenkastens 60 dargestellt. Durch die Fensterfläche 61 ist von außerhalb des Wagenkastens 60 eine Palme zu erkennen. Auf der Fensterfläche 61 kann eine diffraktive Folie 11, wie vorstehend beispielsweise mit Bezug zur Fig. 1 beschrieben, angeordnet. An der Decke des Wagenkastens 60 ist beabstandet zur diffraktiven Folie 11 eine bildgebende Lichtquelle 12 angeordnet. Die bildgebende Lichtquelle 12 ist eingerichtet, die diffraktive Folie 12 mit einer vorbestimmten Wellenlänge bzw. einem vorbestimmten Wellenlängenbereich direkt zu beleuchten.

Die bildgebende Lichtquelle 12 kann ein Bildsignal von einer Steuervorrichtung 30 empfangen. Dazu kann die Anzeigevorrichtung eine entsprechende Schnittstelle (nicht gezeigt) aufweisen. Das Bildsignal kann die bildgebende Lichtquelle 12 steuern.

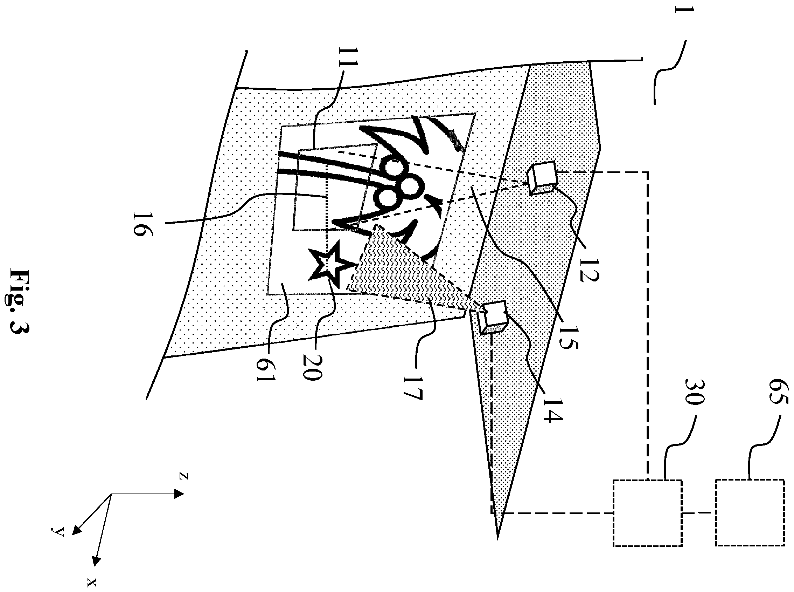

Fig. 3 zeigt eine perspektivische schematische Ansicht einer weiteren Ausführungsform des Systems 1 nach einem Aspekt der Offenbarung.

Die Darstellung der Fig. 3 basiert auf derjenigen der Fig. 2 und umfasst ferner eine Sensoreinheit 14. Die Sensoreinheit 14 der Fig. 3 kann als Kamera ausgebildet sein. Die Kamera kann einen Sichtbereich 17 aufweisen, mittels dem der Betrachtungsbereich 20 sowie eine Fahrgastinteraktion in dem Betrachtungsbereich 20 erfasst und/oder interpretiert werden kann. Durch Erfassen beispielsweise der Handbewegung eines Fahrgasts im Zusammenhang mit dem in den Betrachtungsbereich 20 umgelenkten Bild kann eine Geste des Fahrgasts bestimmt werden. Basierend auf der bestimmten Geste kann die Kamera ein Sensorsignal bereitstellen. Das Sensorsignal kann eine Betrachterinteraktion umfassen. Die Steuervorrichtung 30 kann ferner eingerichtet sein, das Sensorsignal von der Kamera zu empfangen oder abzufragen und basierend auf dem Sensorsignal ein Bildsignal und/oder ein objektspezifisches Steuersignal zu erzeugen. Dadurch kann die Anzeigevorrichtung bzw. das Objekt durch den Benutzer/Betrachter interaktiv gesteuert werden.

In Fig. 3 ist ferner eine zentrale Wagensteuervorrichtung 65 dargestellt, die datenkommunikativ mit der Anzeigevorrichtung 10, beispielsweise mittels der Steuervorrichtung 30 verbunden sein kann.

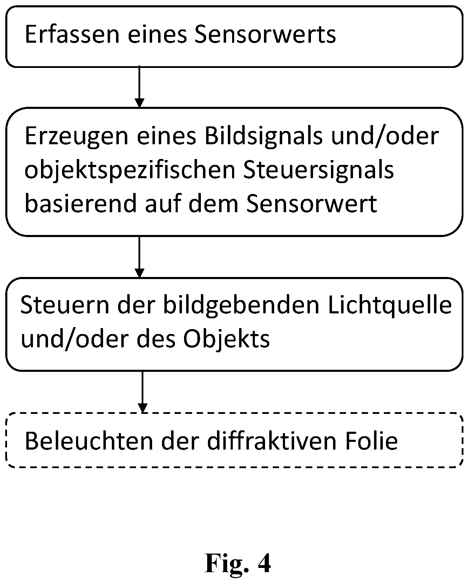

Fig. 4 zeigt ein Ablaufdiagramm eines Steuerungsverfahrens der Anzeigevorrichtung 10 nach einem Aspekt der Erfindung.

Das Verfahren kann in einem ersten Schritt ein Erfassen eines Sensorwerts umfassen. Der Sensorwert kann beispielsweise ein Positionswert, ein Helligkeitswert und/oder eine Benutzerinteraktion mit der Anzeigevorrichtung umfassen.

Das Verfahren kann in einem zweiten Schritt ein Erzeugen eines Bildsignals und/oder eines objektspezifischen Steuersignals basierend auf dem Sensorwert umfassen.

Das Verfahren kann in einem dritten Schritt ein Steuern der bildgebenden Lichtquelle 12 umfassen. Das Verfahren kann in dem dritten Schritt ein Steuern des Objekts 60 des öffentlichen Personenverkehrs umfassen. Dieser dritte Schritt kann auf dem Bildsignal bzw. des Steuersignals des zweiten Schritts basieren. Das heißt, das Bildsignal kann die Steuerung der bildgebenden Lichtquelle 12 veranlassen. Das Steuersignal kann ein Gestensteuersignal sein.

Das Verfahren kann in einem optionalen vierten Schritt ein Beleuchten der diffraktiven Folie 11 umfassen. Dazu kann die bildgebende Lichtquelle 12 ein Licht emittieren, das das Bildsignal repräsentiert. Das Licht weist eine vorbestimmte Wellenläge bzw. einen vorbestimmten Wellenlängenbereich auf.

Als unmittelbare Konsequenz des vierten Schritts kann mittels der diffraktiven Folie 11 das Licht der bildgebenden Lichtquelle 12 in einen Betrachtungsbereich 20 umgelenkt werden. In dem Betrachtungsbereich 20 (engl.: "eye box") kann die durch das Bildsignal repräsentierte Information in einer von dem Betrachter einfach aufnehmbaren Weise repräsentiert werden.

Alternativ kann in dem vierten Schritt eine obj ektspezifische Funktion ausgeführt werden.

### Bezugszeichen

- 1: System
- 10: Anzeigevorrichtung
- 11: diffraktive Folie
- 11a: Anzeigeseite der diffraktiven Folie 11
- 12: bildgebende Lichtquelle
- 14: Sensoreinheit
- 15: Licht der bildgebenden Lichtquelle 12
- 16: umgelenktes Licht
- 17: Sichtbereich der Sensoreinheit 14
- 20: Betrachtungsbereich
- 30: Steuervorrichtung
- 60: Objekt des öffentlichen Personenverkehrs
- 61: Fensterfläche des Objekts 60
- 65: zentrale Objektsteuervorrichtung

## Patentansprüche

1. Anzeigevorrichtung (10) für ein Objekt (60) des öffentlichen Personenverkehrs zur Darstellung eines Bildes, wobei die Anzeigevorrichtung (10) umfasst:
eine diffraktive Folie (11), die ein Volumengitter aufweist und eingerichtet ist, einfallendes Licht mit einer vorbestimmten Wellenlänge in einem winkelspezifischen Betrachtungsbereich (20) darzustellen; und
eine bildgebende Lichtquelle (12) zur Emission von Licht mit der vorbestimmten Wellenlänge,
wobei die bildgebende Lichtquelle (12) beabstandet zur diffraktiven Folie (11) angeordnet ist und eingerichtet ist, die diffraktive Folie (11) zu beleuchten.

2. Anzeigevorrichtung (10) nach Anspruch 1, ferner umfassend eine Schnittstelle zu einer Steuervorrichtung (30) zum Empfangen eines Bildsignals, wobei die bildgebende Lichtquelle (12) eingerichtet ist, ein das Bildsignal repräsentierendes Licht zu emittieren.

3. Anzeigevorrichtung (10) nach Anspruch 1 oder 2, wobei das Volumengitter der diffraktiven Folie (11) mehrere Teilgitter aufweist, wobei die Teilgitter jeweils durch Belichtung mit Laserlicht mit einer vorbestimmten Wellenlänge eingebracht sind.

4. Anzeigevorrichtung (10) nach einem der vorhergehenden Ansprüche, wobei die diffraktive Folie (11) eine Transparenz von zumindest 94%, bevorzugt zumindest 96% aufweist.

5. Anzeigevorrichtung (10) nach einem der vorhergehenden Ansprüche, wobei die bildgebende Lichtquelle (12) auf einer Betrachterseite (1 1a) der diffraktiven Folie (11) angeordnet ist, außerhalb eines Blickfelds eines Betrachters der diffraktiven Folie (11).

6. Anzeigevorrichtung (10) nach einem der vorhergehenden Ansprüche, wobei die bildgebende Lichtquelle (12) derart angeordnet ist, dass das emittierte Licht mit einem Einfallswinkel von zumindest 8° auf die diffraktive Folie (11) einstrahlt.

7. Anzeigevorrichtung (10) nach einem der vorhergehenden Ansprüche, wobei die diffraktive Folie (11) auf einer Verkehrsfläche des Objekts (60) und/oder auf einer Fensterfläche (61) des Objekts (60) angeordnet ist.

8. Anzeigevorrichtung (10) nach einem der vorhergehenden Ansprüche, ferner aufweisend eine Schutzfolie und/oder eine Antireflexfolie, die auf der diffraktiven Folie (11) angeordnet ist bzw. sind, wobei die Schutzfolie und/oder Antireflexfolie die diffraktive Folie (11) auf wenigstens einer Seite überlappt und vorzugsweise eine größere Fläche als die diffraktive Folie (11) aufweist.

9. Anzeigevorrichtung (10) nach einem der vorhergehenden Ansprüche, ferner umfassend eine Steuervorrichtung (30), die durch einen Kommunikationskanal mit der bildgebenden Lichtquelle (12) verbunden ist und eingerichtet ist, ein Bildsignal zu erzeugen und/oder zu empfangen und der bildgebenden Lichtquelle (12) über den Kommunikationskanal bereitzustellen, wobei der Kommunikationskanal vorzugsweise drahtlos ist.

10. Anzeigevorrichtung (10) nach dem vorhergehenden Anspruch, ferner umfassend zumindest eine Sensoreinheit (14),
wobei die Steuervorrichtung (30) konfiguriert ist, ein Sensorsignal von der zumindest einen Sensoreinheit (14) zu empfangen oder abzufragen und das Licht der bildgebenden Lichtquelle (12) und/oder eine objektspezifische Funktion basierend auf dem Sensorsignal zu steuern.

11. Anzeigevorrichtung (10) nach dem vorhergehenden Anspruch, wobei zumindest eine der zumindest einen Sensoreinheit (14) und die Steuervorrichtung (30) in einem gemeinsamen Gehäuse angeordnet sind.

12. Anzeigevorrichtung (10) nach einem der vorhergehenden Ansprüche 10 oder 11,
wobei die zumindest eine Sensoreinheit (14) einen Positionssensor umfasst und das Sensorsignal einen Positionswert umfasst; und/oder
wobei die zumindest eine Sensoreinheit (14) einen Lichtsensor umfasst und das Sensorsignal einen Helligkeitswert umfasst; und/oder
wobei die zumindest eine Sensoreinheit (14) eine Kamera umfasst und das Sensorsignal eine Betrachterinteraktion, insbesondere Gestensteuerung, umfasst.

13. Anzeigevorrichtung (10) nach dem vorhergehenden Anspruch, sofern das Sensorsignal einen Helligkeitswert umfasst, die Steuervorrichtung (30) konfiguriert ist, eine Lichtintensität der bildgebenden Lichtquelle (12) basierend auf dem Helligkeitswert zu steuern, insbesondere die Lichtintensität abhängig vom Helligkeitswert stufenlos zu erhöhen und/oder zu reduzieren.

14. System (1), umfassend:
ein Objekt (60) des öffentlichen Personenverkehrs; und zumindest eine Anzeigevorrichtung (10) nach einem der vorhergehenden Ansprüche, die in oder an dem Objekt (60) angeordnet ist,
wobei die bildgebende Lichtquelle (12) mit einer Versorgungsinfrastruktur des Objekts (60) verbunden ist.

15. System (1) nach dem vorhergehenden Anspruch, ferner aufweisend eine zentrale Objektsteuervorrichtung (65), die eingerichtet ist, ein Bildsignal zu erzeugen und/oder zu empfangen und der zumindest einen Anzeigevorrichtung (10) bereitzustellen.
